# DEMANDE DE BREVET EUROPEEN

(11) **EP 1 997 676 A1**
(43) Date de publication de la demande: **03.12.2008**
(21) Numéro de dépôt: 08153106.3
(22) Date de dépôt: 20.03.2008
(51) Int. Cl.: B60N 2/46, B60R 7/04

(54) **Console nomade et escamotable**

(30) Priorité: 01.06.2007 FR 0755401
(71) Demandeur: Peugeot Citroën Automobiles Société Anonyme, 78140 Velizy Villacoublay (FR)
(72) Inventeur: Bertrand Belanger, Pascal, 78280, GUYANCOURT (FR)
(74) Mandataire: Vigand, Régis Louis Michel

(57) **Abrégé**

Console (1) nomade et escamotable, pouvant être logée dans un logement (2) en position escamotée caractérisée en ce qu'une de ses extrémités est montée sur un axe (3b) d'un moyen de support (3) contenu dans ce logement (2) et qu'elle peut pivoter autour de l'axe (3b) de ce support (3) pour être placée en position déployée, sa majeure partie étant hors du logement (2), le support (3) étant par ailleurs mobile dans le logement (2).

Cette console (1) peut être logée dans divers endroits de véhicules de transport, notamment de véhicules automobiles.

## Description

La présente invention concerne une console nomade et escamotable. Une telle console trouve une application préférentielle pour le rangement dans l'habitacle d'un moyen de transport, notamment un véhicule automobile.

Dans des véhicules automobiles dits volumiques c'est-à-dire à grand habitacle tels que monospaces, breaks ou SUV, il est proposé des consoles nomades afin d'étoffer les rangements disponibles. En général, ces consoles sont constituées d'une boîte de forme cubique fixée sur des rails permettant le déplacement dans le véhicule, principalement entre les occupants de devant et de derrière. Quelques fois aussi, ces consoles sont amovibles et peuvent être déposées à l'extérieur du véhicule ou rangées dans le coffre dans un endroit spécifique.

L'inconvénient majeur de ces consoles réside dans le fait qu'elles sont encombrantes : ceci est particulièrement préjudiciable lorsque les occupants du véhicule n'en ont pas utilité et qu'elles doivent rester tout de même en place. Lors d'un déplacement du véhicule même avec une console amovible, il n'existe pas une solution de rangement de celle-ci à l'intérieur même du véhicule sans qu'elle empiète sur l'habitabilité du véhicule ou sans qu'on doive arrêter le véhicule pour la placer dans le coffre.

Par ailleurs, il existe des consoles qui peuvent être rangées dans le plancher de véhicule dans une position ne limitant donc pas l'habitabilité du véhicule. Le document FR-A- 2 662 404 décrit un dispositif de rangement sur un plancher de véhicule automobile du type comportant des consoles de rangement de différents types et disposées dans des cavités du plancher, ces consoles s'étendant entre un plancher supérieur et un plancher inférieur le long de longerons. Certaines de ces consoles peuvent s'ouvrir par rotation vers le haut d'un capot autour d'un axe horizontal, des moyens étant prévus pour soutenir le capot dans sa position levée, ces moyens pouvant être sous la forme de bras de soutien comportant plusieurs parties articulées entre elles qui sont alignées quand le bras est déplié en soutien du capot en s'étendant dans un plan vertical avec son extrémité supérieure supportant par-dessous le capot et son extrémité inférieure fixée de manière à pouvoir coulisser sur le plancher supérieur.

De telles consoles présentent plusieurs désavantages. Premièrement, la surface de rangement n'est pas extraite du plancher mais reste entre les planchers supérieur et inférieur. En effet, seul le capot est sorti du plancher et celui-ci ne dispose pas d'une surface de rangement : la surface de rangement n'est donc pas facilement accessible pour les passagers du véhicule. Secondement, cette console n'est pas mobile en translation dans le véhicule pour être approchée par exemple des passagers avant ou arrière, ce qui était une fonction désirée pour les consoles de l'art antérieur précédemment décrites.

Le but de la présente invention est de fournir une console pouvant être facilement déplacée en position de travail dans le véhicule et qui puisse être placée en position de repos sans limiter l'habitabilité du véhicule pour les passagers.

A cet effet, l'invention a pour objet une console nomade et escamotable, pouvant être logée dans un logement en position escamotée caractérisée en ce qu'une de ses extrémités est montée sur un axe d'un moyen de support contenu dans ce logement et qu'elle peut pivoter autour de l'axe de ce support pour être placée en position déployée, sa majeure partie étant hors du logement, ce support étant par ailleurs mobile dans le logement.

L'effet technique obtenu est une facilité d'accès à la console en position déployée pour les passagers et un encombrement pratiquement nul en position escamotée.

Avantageusement, la console est supportée dans sa position déployée par des moyens de soutien disposés entre elle et le support, ces moyens pouvant être du type bras repliable ou vérin.

Son déploiement hors du logement peut s'effectuer manuellement ou automatiquement avec au moins un vérin disposé avec sa tige fixée à proximité de l'extrémité de la console pivotante autour de l'axe et son corps fixé au support. Quand le déploiement de la console hors du logement est effectué manuellement par l'utilisateur, le vérin est un vérin passif automatiquement blocable en position, tandis que quand le déploiement est effectué automatiquement, le vérin est alors un vérin moteur qui par son action de poussée sur la console provoque le pivotement et le déploiement de celle-ci.

Préférentiellement, le support est un chariot mobile dans le sens longitudinal du logement.

Le chariot présente avantageusement au moins une roue de chaque côté de la console qui coopère avec un rail s'étendant dans le sens longitudinal du logement.

Au moins sur un de ses côtés, le chariot peut présenter des moyens de blocage du chariot en position coopérant avec des moyens correspondants du logement ainsi que des moyens de mise en position bloquée.

Dans un mode préféré de réalisation de l'invention, les moyens de blocage du chariot en position sont formés d'un doigt pénétrant lors du blocage dans un créneau d'une crémaillère disposée dans le logement parallèlement aux rails et les moyens de mise en position bloquée sont constitués d'un ressort exerçant sur le doigt une force de rappel en direction du créneau de la crémaillère.

Des moyens de commande de désengagement des moyens de blocage peuvent être prévus et ces moyens de commande de désengagement sont activés soit manuellement avec un levier par manipulation d'un utilisateur, soit automatiquement par commande électrique, notamment par télécommande.

La console peut présenter une surface de travail principale en une ou plusieurs parties faisant sensiblement face à la surface de base du logement quand la console est escamotée et des surfaces de travail latérales, des ouvertures pouvant être aménagées dans toutes ces surfaces pour le rangement d'objets par l'utilisateur, ces ouvertures présentant préférentiellement des moyens de fermeture pour les positions de non utilisation, d'autres moyens de retenue divers tels que bandes élastiques de maintien, sacs ou analogues étant aussi prévus sur ces surfaces.

Avantageusement, le sens longitudinal du logement est orthogonal à l'axe de pivotement de la console.

Préférentiellement, la console, en position escamotée ferme complètement le logement.

Une telle console peut être logée dans de nombreuses parties d'un véhicule automobile, notamment le faux plancher du véhicule, un accoudoir, un dos de siège, une porte, le tableau de bord, etc.

L'invention va maintenant être décrite plus en détail mais de façon non limitative en regard des figures annexées, dans lesquelles :
- la figure 1 est une coupe longitudinale de la console selon l'invention en position de repos escamotée dans un logement aménagé,
- la figure 2 est une coupe en vue de face de la console selon l'invention en position escamotée,
- la figure 3 est une coupe longitudinale de la console selon l'invention dans une de ses positions de travail juste après déploiement hors du logement aménagé,
- la figure 4 est une coupe longitudinale de la console selon l'invention dans une de ses positions de travail après déploiement et translation le long du logement aménagé.

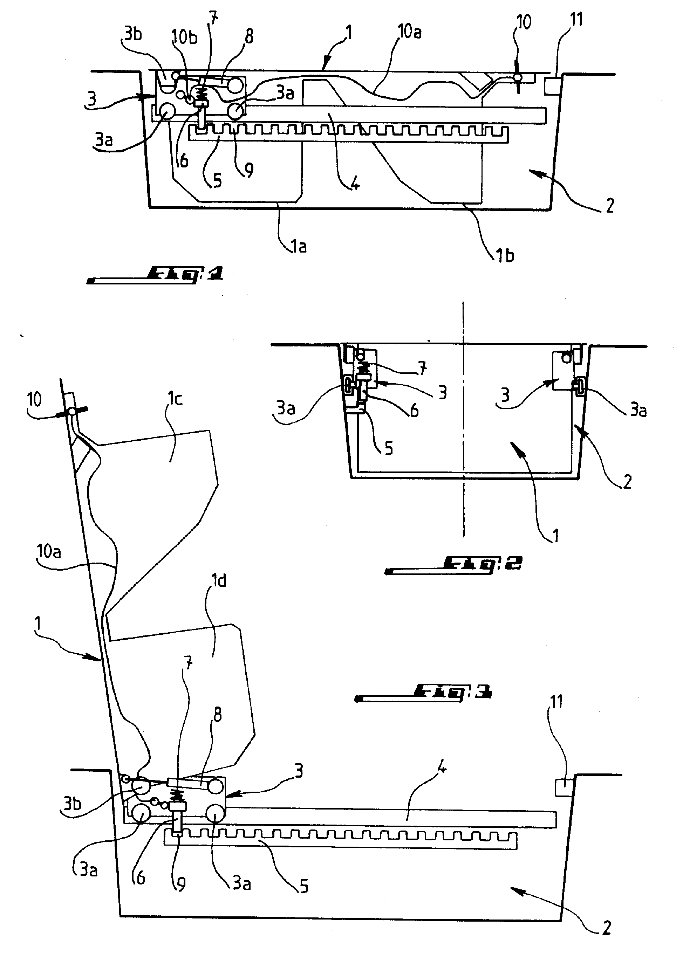

La figure 1 montre une coupe longitudinale de la console 1 selon l'invention dans une position de repos escamotée à l'intérieur d'un logement aménagé 2 et la figure 2 montre une coupe en vue de face de la console 1 en position escamotée.

Ce logement 2 peut se trouver dans le faux plancher d'un véhicule ou être placé en surépaisseur du plancher ou plus haut par exemple dans un accoudoir pour passager du véhicule. De même, il peut présenter plusieurs formes adaptées à la console à recevoir : dans les dessins il sera sensiblement sous la forme d'un parallélépipède. La console 1 peut aussi présenter une forme parallélépipédique ou présenter deux parties distinctes 1a et 1b comme montrées aux figures. Elle peut aussi être munie de moyens permettant de la réception d'objets sur sa surface de travail, du type bandes élastiques de maintien ou sacs.

Sur ces figures, on peut voir qu'à une extrémité de la console 1 dite extrémité de pivotement, de chaque côté de la console 1 se trouve un chariot 3. Ce chariot 3 peut être mobile en translation dans le sens longitudinal du logement 2, en étant par exemple monté sur des rails 4 s'étendant dans la longueur du logement 2, par l'intermédiaire d'au moins une roue 3a glissant sur ce rail 4. Sur les figures, il est montré deux roues 3a de chaque côté du chariot 3. Une crémaillère 5 s'étend parallèle aux rails d'un côté du chariot 3. Le chariot 3 comprend un moyen de blocage en position 6 lors de sa translation, moyen 6 qui s'introduit dans un créneau 9 de la crémaillère 5 pour blocage et qui sera détaillé ultérieurement, de même que le moyen de mise en position bloquée 7 dans la crémaillère 5 de ce moyen de blocage 6 et que le moyen de commande de désengagement 10, 10a, 10b, disposé à l'avant de la console 1 sur sa partie la plus haute après déploiement.

Le chariot 3 comprend en outre un axe 3b pour le pivotement de la console 1 lors de son déploiement et un moyen de soutien 8 pour la console 1 en position déployée. Ce moyen de soutien 8 peut par exemple être un ou des vérins et des bras repliables ou analogues.

Le logement présente une butée 11 pour le support de l'extrémité de la console 1 qui ne pivote pas autour de l'axe 3b quand ladite console 1 est en position escamotée. Un moyen de verrouillage de cette extrémité de la console 1 peut aussi être prévu : avantageusement il est du type à verrouillage automatique avec par exemple un clip.

La figure 3 montre une coupe longitudinale de la console 1 dans une de ses positions de travail juste après déploiement hors du logement 2 aménagé.

Ce pivotement peut s'effectuer soit manuellement soit automatiquement.

Dans le premier cas, l'opérateur soulève la partie avant de la console 1 en introduisant par exemple son doigt entre la partie avant de la console 1 et la butée 11, après déverrouillage d'un dispositif de fermeture si besoin est, ou en utilisant un moyen connu comme crochet ou anneau (non représenté sur les figures) fixé sur cette partie avant de la console 1 pour soulever cette extrémité. Le moyen de soutien 8 de la console 1 en position déployée se compose alors d'au moins un vérin passif dont le cylindre est fixé sur le chariot et la tige sur la console 1. Lors du soulèvement de la partie avant de la console 1, la partie arrière de celle-ci pivote autour de l'axe 3b du chariot 3 et une partie de la tige du vérin 8 sort du cylindre. Ce vérin est du type bien connu à blocage automatique en position dès qu'aucune traction n'est exercée sur la tige. La console 1 est donc maintenue en position déployée par le vérin 8.

Dans le second cas, c'est l'opérateur qui active le moyen de soutien constitué d'au moins un vérin 8 moteur, placé similairement au vérin passif du déploiement manuel de la console 1, ce vérin 8 moteur appuyant par l'intermédiaire de sa tige sur la console 1 pour la faire pivoter autour de l'axe 3b du chariot. Cette activation du vérin 8 peut être effectuée à l'aide de moyens électrique par exemple une télécommande ou par pression sur un bouton de commande par l'utilisateur. Il peut y avoir un vérin 8 de chaque côté de la console pour effectuer un meilleur soutien de la console 1. Dans le cas d'un pivotement automatique, on peut associer au vérin moteur d'un côté de la console 1 un vérin passif de l'autre côté ou prévoir un vérin moteur de chaque côté de la console 1.

Durant toute cette opération, le chariot 3 supportant la console 1 peut être bloqué dans sa translation sur les rails 4. Ceci est obtenu à l'aide du moyen de blocage en position 6, montré sur les figures sous la forme d'un doigt 6 qui s'introduit dans un créneau 9 de la crémaillère 5 pour blocage. Ce doigt 6 est soumis à l'action d'un ressort 7, formant le moyen de mise en position bloquée, disposé au dessus de la partie supérieure du doigt 6 et qui le pousse dans une position de blocage dans la crémaillère 5 quand celui-ci se trouve en face d'un de ses créneaux. La console 1 est donc parfaitement maintenue en position, du fait de ces deux moyens de blocage, le ou les vérins 8 empêchant tout pivotement de la console 1 autour de son axe 3b et le doigt 6 combiné au ressort 7 empêchant tout mouvement de translation du chariot 3 et donc de la console 1 sur les rails 4.

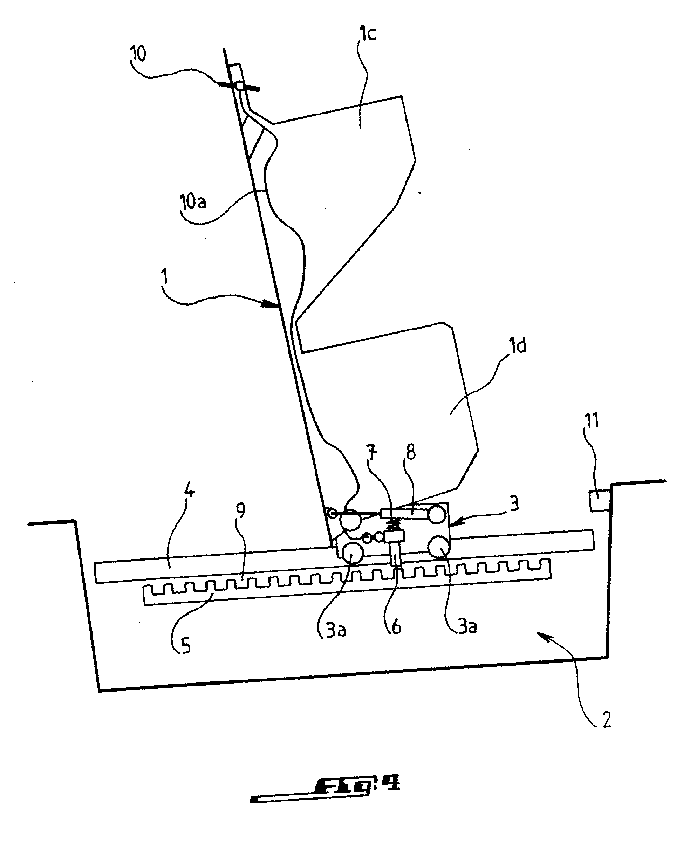

La figure 4 montre une coupe longitudinale de la console 1 dans une de ses positions de travail après déploiement et translation le long du logement 2.

Une caractéristique essentielle de la console 1 selon la présente invention est qu'elle est mobile en translation le long du logement 2 et qu'elle peut être bloquée de manière sûre dans plusieurs positions de travail. Ceci est obtenu en désengageant le doigt 6 d'un créneau 9 de la crémaillère 5 par le moyen de commande de désengagement 10, 10a, 10b. Ce moyen de désengagement 10, 10a, 10b peut être purement mécanique, par exemple un câble 10a supporté par un système de poulies transmettant un mouvement de rotation ou de translation d'un levier 10 du moyen 10, 10a, 10b en un mouvement vertical vers le haut du doigt 6 contre l'action du ressort 7 et donc un désengagement du doigt 6 d'avec le créneau 9 de la crémaillère 5 dans lequel il était logé. Ce moyen de désengagement 10, 10a, 10b peut aussi être électrique utilisant par exemple la force magnétique d'aimants pour retirer le doigt 6 du créneau 9 de la crémaillère 5. Dans ce cas la commande du moyen de désengagement 10, 10a, 10b peut s'effectuer avantageusement par télécommande et l'utilisateur n'a plus à manipuler une quelconque partie de ce moyen : le levier 10 du moyen de commande de désengagement n'a plus alors raison d'être.

Le chariot 3 peut alors rouler sur les rails 4. Encore une fois, ce déplacement peut s'effectuer par action de l'utilisateur qui pousse ou tire la console 1 ou automatiquement par actionnement d'un moteur de déplacement du chariot 3 activé de préférence par télécommande. Une fois que la console 1 se trouve en position choisie, le moyen de commande de désengagement 10, 10a, 10b est désactivé, soit en manoeuvrant manuellement le levier 10 du moyen de commande de désengagement 10, 10a, 10b, ou en désactivant les moyens électriques ou magnétiques de ce moyen de désengagement 10, 10a, 10b, 10c. Le doigt 6 sous l'action du ressort 7 est alors pressé vers la crémaillère 5 et introduit dans un créneau 9 de la crémaillère 5 en position de blocage. Ceci peut être fait avantageusement avant que la console 1 ait fini son mouvement pour une meilleure introduction du doigt 6 dans le créneau 9 : en effet, dès que ce moyen de commande de désengagement 10, 10a, 10b est désactivé, le doigt 6 est poussé vers le bas par le ressort 7 et il peut être en butée contre le haut d'un créneau 9 de la crémaillère 5. Une faible translation du chariot 3 est alors nécessaire pour le faire pénétrer dans un créneau. On peut aussi prévoir un mouvement d'alignement direct du doigt 6 avec un créneau 9 par indexage à l'aide d'un moyen d'alignement non représenté sur les figures et qui arrêtera le mouvement du chariot 3 seulement quand le doigt 6 se trouve au dessus d'un créneau 9 : l'utilisation d'un tel moyen est particulièrement appropriée quand la commande de la console 1 s'effectue automatiquement notamment par télécommande.

Les avantages d'une telle console sont nombreux. En plus de la facilité d'utilisation pour l'utilisateur procurée par la possibilité de déplacer aisément la console 1, la sécurité de fixation de la console 1 aussi bien contre un pivotement ou un déplacement intempestif de celle-ci de même que l'encombrement nul que présente cette console 1 une fois rangée, la console 1 présente un risque minimal de blessure pour les occupants du véhicule du fait que tous les moyens de déplacement de la console 1 se trouvent dans le logement 2, ce qui empêche une interférence intempestive des passagers avec des moyens pouvant être coupants tels des rails 4 ou une crémaillère 5.

De plus, quand la console 1 se trouve dans un élément mobile du véhicule, par exemple un accoudoir, cette console 1 présente l'avantage de ne pas empêcher l'élément de remplir son rôle quand celle-ci est escamotée. Par exemple dans le cas de l'accoudoir, quand la console 1 est rabattue dans celui-ci, la fonction d'accoudoir n'est en aucun cas diminuée : il faudra simplement prévoir une surface rembourrée sur la surface de la console complétant l'accoudoir une fois celle-ci en position escamotée. Quand l'accoudoir n'est pas en fonction et est maintenu en place, la console peut être déployée comme précédemment décrit. De plus, quand l'accoudoir n'est pas en fonction et est en position relevée, un déploiement limitée ou complet de la console 1 est aussi possible pour donner l'accès aux passagers à l'intérieur de la console par ses faces de travail 1a, 1b ou par les faces latérales 1c, 1d : il suffira alors de prévoir des accès latéraux, par exemple sous forme de portes, pour l'utilisateur à l'intérieur des surfaces 1c et 1d de la console et, le cas échéant, des moyens de retenue des divers objets entreposés dans la console 1 sur les faces 1a et 1b servant dans les conditions habituelles comme surfaces de travail de cette console : ces moyens pourront être des portes mises en position fermée empêchant les objets de tomber dans cette position de déploiement ou même dans la position escamotée et pouvant être ouvertes dans une position de déploiement normal c'est-à-dire avec une console sensiblement en position verticale. Enfin, si l'accoudoir présente d'autres possibilités de déplacement, par exemple une translation vers l'arrière pour un accoudoir avant et une rotation de celui-ci par divers moyens mécaniques, celles-ci viennent s'ajouter aux possibilités de déplacement propres de la console et rendent celle-ci encore plus accessible pour tous les passagers du véhicule.

Comme il a été vu le logement de la console ne se limite pas à un logement dans le faux plancher du véhicule et peut s'effectuer sur de nombreux autres éléments, comme dos de sièges, accoudoirs, portes, tableau de bord etc.

L'utilisation préférentielle d'une telle console se trouve dans un véhicule automobile mais ce type de console peut aussi trouver d'autres applications dans divers autres domaines.

## Revendications

1. Console (1) nomade et escamotable, pouvant être logée dans un logement (2) en position escamotée **caractérisée en ce qu'**une de ses extrémités est montée sur un axe (3b) d'un moyen de support (3) contenu dans ce logement (2) et qu'elle peut pivoter autour de l'axe (3b) de ce support (3) pour être placée en position déployée, sa majeure partie étant hors du logement (2), le support (3) étant par ailleurs mobile dans le logement (2).

2. Console (1) selon la revendication 1, **caractérisée en ce qu'**elle est supportée dans sa position déployée par des moyens de soutien (8) disposés entre elle et le support (3), ces moyens (8) pouvant être du type bras repliable ou vérin.

3. Console (1) selon la revendication 2, **caractérisée en ce que** son déploiement hors du logement (2) peut s'effectuer manuellement ou automatiquement, **en ce qu'**au moins un vérin (8) est disposé avec sa tige fixée vers l'extrémité de la console (1) pivotante autour de l'axe (3b) et son corps fixé au support (3) et que quand le déploiement de la console (1) hors du logement (2) est effectué manuellement par l'utilisateur le vérin (8) est un vérin passif automatiquement blocable en position, tandis que quand le déploiement est effectué automatiquement, le vérin (8) est alors un vérin moteur qui par son action de poussée sur la console (1) provoque le pivotement et le déploiement de celle-ci.

4. Console (1) selon l'une quelconque des revendications 1 à 3, **caractérisée en ce que** le support est un chariot (3) mobile dans le sens longitudinal du logement (2).

5. Console (1) selon la revendication 4, **caractérisée en ce que** le chariot (3) présente au moins une roue (3a) de chaque côté de la console (1) qui coopère avec un rail (4) s'étendant dans le sens longitudinal du logement (2).

6. Console (1) selon la revendication 4 ou 5, **caractérisée en ce que**, au moins sur un de ses côtés, le chariot (3) présente des moyens de blocage (6) du chariot en position coopérant avec des moyens correspondants (5) du logement ainsi que des moyens de mise en position bloquée (7).

7. Console (1) selon la revendication 6, **caractérisée en ce que** les moyens de blocage du chariot (3) en position sont formés d'un doigt (6) pénétrant lors du blocage dans un créneau (9) d'une crémaillère (5) disposée dans le logement (2) parallèlement aux rails et **en ce que** les moyens de mise en position bloquée sont constitués d'un ressort (7) exerçant sur le doigt (6) une force de rappel en direction du créneau (9) de la crémaillère (5) .

8. Console (1) selon la revendication 6 ou 7, **caractérisée en ce que** des moyens de commande de désengagement (10, 10a, 10b) des moyens de blocage (6) sont prévus et que ces moyens de commande de désengagement (10, 10a, 10b) sont activés soit manuellement avec un levier (10) par manipulation d'un utilisateur, soit automatiquement par commande électrique, notamment par télécommande.

9. Console (1) selon l'une quelconque des revendications précédentes, **caractérisée en ce qu'**elle présente une surface de travail principale en une ou plusieurs parties (1a, 1b) faisant sensiblement face à la surface de base du logement (2) quand la console (1) est escamotée et des surfaces de travail latérales (1c, 1d), des ouvertures pouvant être aménagées dans toutes ces surfaces (1a, 1b, 1c, 1d) pour le rangement d'objets par l'utilisateur, ces ouvertures présentant préférentiellement des moyens de fermeture pour les positions de non utilisation, d'autres moyens de retenue diverses tels que bandes élastiques de maintien, sacs ou analogues étant aussi prévus sur ces surfaces (1a, 1b, 1c, 1d) .

10. Console (1) selon l'une quelconque des revendications précédentes, **caractérisé en ce que** le sens longitudinal du logement (2) est orthogonal à l'axe de pivotement de la console (1).

11. Console (1) selon l'une quelconque des revendications précédentes, **caractérisé en ce qu'**en position escamotée, elle ferme complètement le logement (2).

12. Console (1) selon l'une quelconque des revendications précédentes, **caractérisée en ce qu'**elle peut être logée dans une partie d'un véhicule automobile, notamment le faux plancher du véhicule, un accoudoir, un dos de siège, une porte, le tableau de bord, etc.
